# EUROPÄISCHE PATENTSCHRIFT

(11) **EP 2 301 137 B1**
(45) Veröffentlichungstag und Bekanntmachung des Hinweises auf die Patenterteilung: **31.10.2012**
(21) Anmeldenummer: 09780295.3
(22) Anmeldetag: 08.07.2009
(51) Int. Cl.: H02K 1/20, H02K 1/32, H02K 9/06

(54) **ELEKTRISCHE MASCHINE MIT RADIALTRENNBLECHEN ZUR KÜHLLUFTFÜHRUNG**
ELECTRIC MACHINE HAVING RADIAL DIVIDERS FOR GUIDING COOLING AIR
MACHINE ÉLECTRIQUE POURVUE DE TÔLES DE SÉPARATION RADIALES POUR LE GUIDAGE DE L'AIR DE REFROIDISSEMENT

(30) Priorität: 21.07.2008 DE 102008033959
(43) Veröffentlichungstag der Anmeldung: 30.03.2011
(73) Patentinhaber: Siemens Aktiengesellschaft, 80333 München (DE)
(72) Erfinder: EICHINGER, Benjamin, 90459 Nürnberg (DE); HÜMER, Thomas, 90451 Nürnberg (DE); LABERMEIER, Jürgen, 90596 Schwanstetten (DE); MAUSS, Carsten, 93133 Burglengenfeld (DE); NIEDERMEYER, Josef, 91161 Hilpoltstein (DE); RESSEL, Ekkehard, 91560 Heilsbronn (DE); WEISS, Sebastian, 90522 Oberasbach (DE)
(86) Internationale Anmeldenummer: PCT/EP2009/058646
(87) Internationale Veröffentlichungsnummer: WO 2010/018033

(56) Entgegenhaltungen:
- EP-A- 0 291 918
- JP-A- 48 099 606
- JP-A- 56 066 155
- JP-A- 2001 008 410
- US-A- 4 442 371

## Beschreibung

Die vorliegende Erfindung betrifft eine elektrische Maschine.

Elektrische Maschinen sind allgemein bekannt.

Die biespielsweise aus der EP 0 291 918 A2 bekannte elektrische Maschine weist ein Gehäuse auf. Im Gehäuse ist eine Rotorwelle in Lagern gelagert, so dass sie um eine Wellenachse drehbar ist. Das Gehäuse weist zwei Stirnflächen und eine Mantelfläche auf. Mit den Stirnflächen begrenzt das Gehäuse einen Gehäuseinnenraum axial. Mit der Mantelfläche begrenzt das Gehäuse den Gehäuseinnenraum radial. Auf der Rotorwelle ist ein Läuferblechpaket drehfest angeordnet. Das Läuferblechpaket weist axial verlaufende Kühlkanäle und radial verlaufende Kühlkanäle auf. Die radial verlaufenden Kühlkanäle des Läuferblechpakets sind nach radial außen offen und erstrecken sich nach radial innen zumindest bis zu den axial verlaufenden Kühlkanälen. Das Gehäuse weist zwei Axialtrennbleche auf, die sich ausgehend von der Mantelfläche nach radial innen erstrecken, aber vor der Rotorwelle enden. Die Axialtrennbleche sind in Axialrichtung gesehen zwischen dem Läuferblechpaket und den Stirnflächen angeordnet. Das Gehäuse weist Axialrippen auf, die über den Umfang der Mantelfläche verteilt angeordnet sind, zumindest zwischen den Axialtrennblechen axial verlaufen und sich nach radial innen erstrecken. Sie tragen ein Ständerblechpaket. Das Ständerblechpaket wirkt mit dem Läuferblechpaket elektrisch zusammen. Das Ständerblechpaket weist radial verlaufende Kühlkanäle auf, die nach radial innen und nach radial außen offen sind und mit den radial verlaufenden Kühlkanälen des Läuferblechpakets zusammenwirken. Das Ständerblechpaket trägt eine Ständerwicklung. Die Ständerwicklung weist Wicklungsköpfe auf, die axial beidseitig aus dem Ständerblechpaket herausragen. Die Axialtrennbleche erstrecken sich so weit nach radial innen, dass sie in Radialrichtung gesehen die Wicklungsköpfe überdecken. Die Mantelfläche weist in einem ersten Tangentialbereich zwei Einlassöffnungen und eine Auslassöffnung für Kühlluft auf. Die Einlassöffnungen sind in Axialrichtung gesehen zwischen je einer der Stirnflächen und je einem der Axialtrennbleche angeordnet. Die Auslassöffnung ist in Axialrichtung gesehen zwischen den Axialtrennblechen angeordnet.

Bei der elektrischen Maschine des Standes der Technik wird die Kühlluft von beiden Seiten axial in das Läuferblechpaket eingeführt. Die Kühlluft durchströmt zunächst das Läuferblechpaket und sodann das Ständerblechpaket. Aus dem Ständerblechpaket tritt die Kühlluft nach radial außen aus. Sodann tritt die Kühlluft entweder direkt über die Auslassöffnung nach außen aus oder strömt axial in einen Bereich, in dem die Wicklungsköpfe angeordnet sind. Dort strömt die Kühlluft tangential, bis sie den ersten Tangentialbereich erreicht. Dort durchströmt die Kühlluft die Auslassöffnung und tritt aus der elektrischen Maschine aus.

Ein zweiter Teil der Kühlluft strömt nicht durch das Läuferblechpaket, sondern direkt durch die Wicklungsköpfe. Dieser Teil der Kühlluft tritt nach dem Durchströmen der Wicklungsköpfe direkt nach radial außen aus und vermischt sich mit dem ersten Teil der Kühlluft. Teilweise behindern sich der erste und der zweite Teil der Kühlluft hierbei gegenseitig.

Im Stand der Technik ist es bekannt, diese gegenseitige Behinderung hinzunehmen und die hiermit verbundene schlechtere Ausnützung der elektrischen Maschine in Kauf zu nehmen. Weiterhin ist bekannt, relativ starke Lüfter einzusetzen, welche einen entsprechend großen Kühlluftstrom bewirken. Weiterhin ist bekannt, völlig andere Kühlluftführungen zu verwenden.

Die Aufgabe der vorliegenden Erfindung besteht darin, eine elektrische Maschine der eingangs genannten Art derart auszugestalten, dass unter Beibehaltung des prinzipiellen Aufbaus eine effektivere Luftführung erreicht werden kann.

Die Aufgabe wird durch eine elektrische Maschine mit den Merkmalen des Anspruchs 1 gelöst. Erfindungsgemäß ist zusätzlich zu den eingangs genannten Merkmalen vorgesehen, dass das Gehäuse zwei Radialtrennbleche aufweist, die in Radialrichtung gesehen zwischen den Wicklungsköpfen der Ständerwicklung und den Axialrippen angeordnet sind. Die Radialtrennbleche erstrecken sich in Axialrichtung gesehen vom Ständerblechpaket zu je einem der Axialtrennbleche und in Tangentialrichtung gesehen über einen zweiten Tangentialbereich, der zum ersten Tangentialbereich überlappmegsfrei ist,
wobei der erste und der zweite Tangentialbereich sich zusammen mit maximal zwei Resttangentialbereichen zu einem Vollkreis ergänzen, und
wobei die Axialrippen im Bereich der Radialtrennbleche eine geringere Radialerstreckung aufweisen als im Bereich des Ständerblechpakets.

Die erfindungsgemäße elektrische Maschine kann auf verschiedene Weise ausgestaltet werden.

So ist es beispielsweise möglich, dass die Axialtrennbleche radial innere Enden aufweisen, die in Radialrichtung gesehen weiter radial innen angeordnet sind als die Wicklungsköpfe, und an den radial inneren Enden der Axialtrennbleche Abschlussringe angeordnet sind, die sich in Axialrichtung gesehen auf das Ständerblechpaket zu erstrecken, aber vom Ständerblechpaket beabstandet sind.

Alternativ oder zusätzlich zur erstgenannten Ausgestaltung ist es möglich, dass auf der Rotorwelle im Bereich der Axialtrennbleche Lüfter angeordnet sind.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: einen Längsschnitt durch eine erfindungsgemäße elektrische Maschine,
- FIG 2: einen Schnitt längs einer Linie A-A in FIG 1 und
- FIG 3: einen Schnitt längs einer Linie B-B in FIG 1.

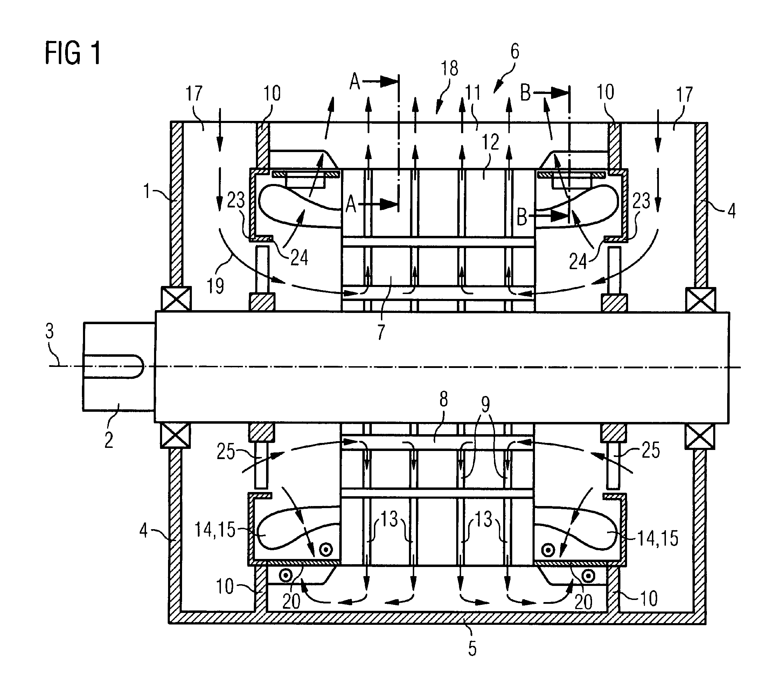

Die FIG 1 bis 3 werden nachfolgend gemeinsam erläutert, da sie dieselbe elektrische Maschine darstellen. Zunächst wird hierbei das Grundprinzip der vorliegenden Erfindung und dessen Wirkungsweise erläutert, sodann mögliche Ausgestaltungen.

Gemäß den FIG 1 bis 3 weist eine elektrische Maschine ein Gehäuse 1 auf. Im Gehäuse 1 ist eine Rotorwelle 2 gelagert, so dass sie um eine Wellenachse 3 drehbar ist. In der Regel erfolgt hierbei eine Lagerung in Lagern. Die Lager sind oftmals als Wälzlager ausgebildet, beispielsweise als Kugellager. Die Lager können jedoch auch andersartig ausgebildet sein, beispielsweise als Zylinder- oder Kegellager oder als aktive oder passive Magnetlager.

Soweit nachfolgend die Begriffe "axial", "radial" und "tangential" verwendet werden, sind sie stets auf die Wellenachse 3 bezogen. Der Begriff "axial" bedeutet hierbei eine Richtung parallel zur Wellenachse 3. Der Begriff "radial" bedeutet eine Richtung orthogonal zur Axialrichtung, und zwar auf die Wellenachse 3 zu bzw. von der Wellenachse 3 weg. Der Begriff "tangential" bezeichnet eine Richtung orthogonal zur Axialrichtung und orthogonal zur Radialrichtung, also in einem radialen Abstand von der Wellenachse 3 um die Wellenachse 3 herum.

Das Gehäuse 1 weist zwei Stirnflächen 4 und eine Mantelfläche 5 auf. Mit den Stirnflächen 4 begrenzt das Gehäuse 1 einen Gehäuseinnenraum 6 axial. Mit der Mantelfläche 5 begrenzt das Gehäuse 1 den Gehäuseinnenraum 6 radial.

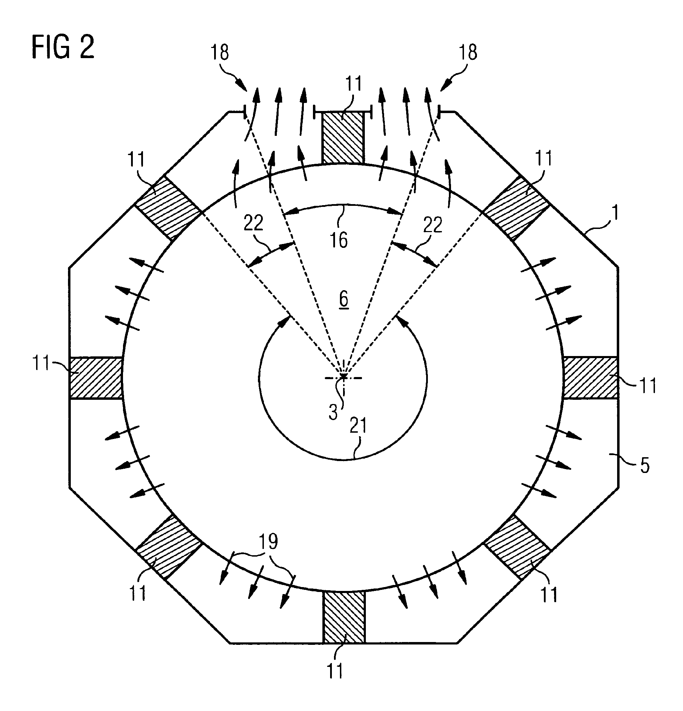

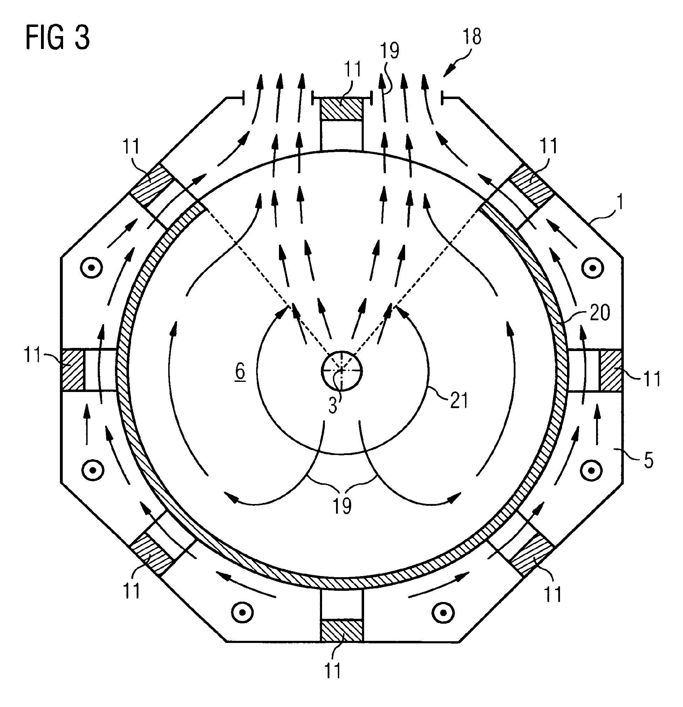

Auf der Rotorwelle 2 ist ein Läuferblechpaket 7 drehfest angeordnet. Das Läuferblechpaket 7 weist axial verlaufende Kühlkanäle 8 und radial verlaufende Kühlkanäle 9 auf. Die axial verlaufenden Kühlkanäle 8 können in der Nähe der Rotorwelle 2 angeordnet sein. Die radial verlaufenden Kühlkanäle 9 des Läuferblechpakets 7 sind nach radial außen offen und erstrecken sich nach radial innen zumindest bis zu den axial verlaufenden Kühlkanälen 8. Die radial verlaufenden Kühlkanäle 9 können sich entsprechend der Darstellung in FIG 1 über die axial verlaufenden Kühlkanäle 8 des Läuferblechpakets 7 nach radial innen erstrecken. Dies ist jedoch nicht zwingend erforderlich. Es reicht aus, wenn sich die radialen Kühlkanäle 9 des Läuferblechpakets 7 bis zu den axial verlaufenden Kühlkanälen 8 erstrecken. Die Rotorwelle 2 und das Läuferblechpaket 7 sind in den FIG 2 und 3 nicht mit dargestellt, um die FIG 2 und 3 nicht zu überfrachten.

Wenn die radial verlaufenden Kühlkanäle 9 des Läuferblechpakets 7 sich über die axial verlaufenden Kühlkanäle 8 hinaus nach radial innen erstrecken, ist das Ausmaß, in dem die Erstreckung über die axial verlaufenden Kühlkanäle 8 hinaus erfolgt, prinzipiell frei wählbar. Insbesondere können die radial verlaufenden Kühlkanäle 9 des Läuferblechpakets 7 alternativ sich bis zur Rotorwelle 2 erstrecken oder in einem radialen Abstand vor der Rotorwelle 2 enden.

Das Gehäuse 1 weist zwei Axialtrennbleche 10 auf, die sich ausgehend von der Mantelfläche 5 nach radial innen erstrecken, aber vor der Rotorwelle 2 enden. Die Axialtrennbleche 10 sind in Axialrichtung gesehen zwischen dem Läuferblechpaket 7 und den Stirnflächen 4 angeordnet. Die Axialtrennbleche 10 sind in Tangentialrichtung gesehen geschlossen, also rundum umlaufend. Besonders deutlich ist dies in den FIG 2 und 3 erkennbar. Die Axialtrennbleche 10 sind weiterhin aus dem Grund mit dem Zusatz "axial" charakterisiert, weil sie verschiedene Axialbereiche der elektrischen Maschine strömungstechnisch voneinander trennen.

Das Gehäuse 1 weist Axialrippen 11 auf, die über den Umfang der Mantelfläche 5 verteilt angeordnet sind. Die Axialrippen 11 verlaufen zumindest zwischen den Axialtrennblechen 10 axial und erstrecken sich nach radial innen. Die Axialrippen 11 tragen ein Ständerblechpaket 12. Das Ständerblechpaket 12 wirkt mit dem Läuferblechpaket 7 elektrisch zusammen. Das Ständerblechpaket 12 weist radial verlaufende Kühlkanäle 13 auf. Die radial verlaufenden Kühlkanäle 13 des Ständerblechpakets 12 sind nach radial innen und nach radial außen offen. Sie wirken mit den radial verlaufenden Kühlkanälen 9 des Läuferblechpakets 7 zusammen. Auch das Ständerblechpaket ist in den FIG 2 und 3 nicht mit dargestellt.

Das Ständerblechpaket 12 trägt eine Ständerwicklung 14. Die Ständerwicklung 13 weist Wicklungsköpfe 15 auf, die axial beidseitig aus dem Ständerblechpaket 12 herausragen. Die Axialtrennbleche 10 erstrecken sich so weit nach radial innen, dass sie in Radialrichtung gesehen die Wicklungsköpfe 15 überdecken.

Die Mantelfläche 5 weist gemäß den FIG 2 und 3 in einem ersten Tangentialbereich 16 zwei Einlassöffnungen 17 und eine Auslassöffnung 18 für Kühlluft 19 auf. Die Einlassöffnungen 18 sind in Axialrichtung gesehen zwischen je einer der Stirnflächen 4 und je einem der Axialtrennbleche 10 angeordnet. Die Auslassöffnung 18 ist in Axialrichtung gesehen zwischen den Axialtrennblechen 10 angeordnet.

Das Gehäuse 1 weist zwei Radialtrennbleche 20 auf, die in Radialrichtung gesehen zwischen den Wicklungsköpfen 15 der Ständerwicklung 14 und den Axialrippen 11 angeordnet sind. Sie erstrecken sich in Axialrichtung gesehen vom Ständerblechpaket 12 zu je einem der Axialtrennbleche 10 und in Tangentialrichtung gesehen über einen zweiten Tangentialbereich 21, der zum ersten Tangentialbereich 16 im wesentlichen komplementär ist. Die Radialtrennbleche 20 sind hierbei mit dem Zusatz "radial" charakterisiert, wie sie in Radialrichtung gesehen verschiedene Bereiche der elektrischen Maschine voneinander trennen.

In der Regel ist der erste Tangentialbereich 16 überlappungsfrei zum zweiten Tangentialbereich 21. Hierbei ist es möglich, dass der erste Tangentialbereich 16 und der zweite Tangentialbereich 21 sich zu einem Vollkreis ergänzen. Oftmals verbleiben jedoch zwei Resttangentialbereiche 22. Wenn die Resttangentialbereiche 22 vorhanden sind, sind sie in der Regel gleich groß. Sie können jedoch in Ausnahmefällen auch unterschiedlich groß sein. Auch ist es möglich, dass nur einer der beiden Resttangentialbereiche 22 vorhanden ist.

Die Radialtrennbleche 20 erstrecken sich gemäß FIG 3 zumindest bis zu den beiden Axialrippen 11, die zum ersten Tangentialbereich 16 unmittelbar benachbart sind. Gemäß dem Ausführungsbeispiel, bei dem acht Axialrippen 11 vorhanden sind und der erste Tangentialbereich 16 eine der Axialrippen 11 überdeckt, sind daher folgende Zahlenwerte gültig: Der erste Tangentialbereich 16 überdeckt in Tangentialrichtung gesehen maximal 90°, gemäß Ausführungsbeispiel rund 45°. Der zweite Tangentialbereich 21 überdeckt mindestens 270°. Dies ist im Ausführungsbeispiel auch so dargestellt.

Wenn der erste Tangentialbereich 16 beispielsweise keine der Axialrippen 11 überdecken würde, würde der erste Tangentialbereich 16 sich zwischen zwei Axialrippen 11 erstrecken und somit maximal 45° überdecken. Der zweite Tangentialbereich 21 würde in diesem Fall mindestens 315° überdecken.

In obigen Zahlenwerten wurde die Tangentialerstreckung der Axialrippen 11 vernachlässigt. Auf Grund der Tangentialerstreckung der Axialrippen 11 können sich in der Praxis geringfügig andere Zahlenwerte ergeben.

Nachfolgend wird erläutert, wie die elektrische Maschine der FIG 1 bis 3 gekühlt wird.

Im Betrieb der elektrischen Maschine rotiert die Rotorwelle 2 um die Wellenachse 3. Die Kühlluft 19 wird über die Einlassöffnungen 17 angesaugt. Ein erster Teil der Kühlluft 19 durchströmt zunächst die axial verlaufenden Kühlkanäle 8 des Läuferbleckpakets 7, sodann die radial verlaufenden Kühlkanäle 9 des Läuferblechpakets 7 und schließlich die radial verlaufenden Kühlkanäle 13 des Ständerblechpakets 12.

Wenn der erste Teil der Kühlluft 19 aus dem Ständerblechpaket 12 austritt, erfolgt das Austreten entweder im ersten Tangentialbereich 16 oder außerhalb des ersten Tangentialbereichs 16. Wenn das Austreten außerhalb des ersten Tangentialbereichs 16 erfolgt, muss die Kühlluft 19 zunächst axial zu den Axialbereichen strömen, in dem sich die Wicklungsköpfe 15 befinden. Dort strömt der betreffende Teil der Kühlluft 19 tangential, bis der erste Tangentialbereich 16 erreicht wird. Sodann strömt die Kühlluft 19 zur Auslassöffnung 18. Von dort tritt sie nach radial außen aus der elektrischen Maschine aus.

Ein zweiter Teil der Kühlluft 19 durchströmt zunächst die Wicklungsköpfe 15. Das Durchströmen kann hierbei alternativ im zweiten Tangentialbereich 21 oder außerhalb des zweiten Tangentialbereichs 21 erfolgen. Wenn das Durchströmen außerhalb des zweiten Tangentialbereichs 21 erfolgt, strömt der betreffende Teil der Kühlluft 19 direkt nach radial außen und weiter über die Auslassöffnung 18 aus der elektrischen Maschine heraus. Vor dem Verlassen der elektrischen Maschine erfolgt hierbei ein Mischen mit dem ersten Teil der Kühlluft 19, der zuvor tangential zum ersten Tangentialbereich 16 geströmt ist.

Wenn der zweite Teil der Kühlluft 19 innerhalb des zweiten Tangentialbereichs 21 durch die Wicklungsköpfe 15 hindurch tritt, wird der entsprechende Teil der Kühlluft 19 durch die Radialtrennbleche 20 in Tangentialrichtung umgelenkt, so dass der entsprechende Teil der Kühlluft 19 zunächst tangential die Radialtrennbleche 20 entlang strömt, bis der zweite Tangentialbereich 21 verlassen wird. Erst sodann erfolgt ein Mischen mit dem ersten Teil der Kühlluft 19. Durch die Radialtrennbleche 20 wird also erreicht, dass der erste und der zweite Teil der Kühlluft 19 sich erst außerhalb des zweiten Tangentialbereichs 21, in dem ihre Strömungsrichtungen im Wesentlichen gleich gerichtet sind, miteinander mischen können. Die entsprechenden Teile der Kühlluft 19 können sich daher nicht gegenseitig behindern, weshalb eine effizientere Kühlung der elektrischen Maschine möglich ist.

Das obenstehend erläuterte Grundprinzip der vorliegenden Erfindung kann auf verschiedene Weise ausgestaltet werden. Die Ausgestaltungen sind hierbei in den FIG 1 bis 3 mit eingezeichnet. Weiterhin sind die nachstehend kombiniert erläuterten Ausgestaltungen unabhängig voneinander realisierbar, also einzeln, paarweise oder zusammen.

In einer ersten Ausgestaltung weisen die Axialtrennbleche 10 radial innere Enden 23 auf. Die radial inneren Enden 23 sind in Radialrichtung gesehen weiter radial innen angeordnet als die Wicklungsköpfe 15. An den radial inneren Enden 23 der Axialtrennbleche 10 sind Abschlussringe 24 angeordnet. Die Abschlussringe 24 erstrecken sich in Axialrichtung gesehen auf das Ständerblechpaket 12 zu. Sie sind jedoch vom Ständerblechpaket 12 beabstandet. Durch diese Ausgestaltung wird eine verbesserte Luftführung erreicht. Insbesondere wird verhindert, dass ein nennenswerter Teil der Kühlluft 19 in einem zu großen Abstand von den Wicklungsköpfen 15 vorbei strömt, so dass er zur Kühlung der elektrischen Maschine nichts beiträgt.

Das Ausmaß, in dem die Abschlussringe 24 sich auf das Ständerblechpaket 12 zu erstrecken, sollte nicht zu groß sein. In der Regel beträgt das Ausmaß maximal 20 % des axialen Abstands der Axialtrennbleche 10 vom Ständerblechpaket 12. Weiterhin beträgt die Axialerstreckung der Abschlussringe 24 in der Regel maximal 15 % des axialen Überstandes der Wicklungsköpfe 15 über das Ständerblechpaket 12.

In einer zweiten möglichen Ausgestaltung sind auf der Rotorwelle 2 im Bereich der Axialtrennbleche 10 Lüfter 25 angeordnet. Durch diese Ausgestaltung kann ein aktives und verstärktes Fördern der Kühlluft 19 und damit eine bessere Kühlleistung erreicht werden.

In einer weiteren bevorzugten Ausgestaltung weisen die Axialrippen 11 im Bereich der Radialtrennbleche 20 eine geringere Radialerstreckung auf als im Bereich des Ständerblechpakets 12. Durch diese Maßnahme ergibt sich eine konstruktiv einfachere Gestaltung der elektrischen Maschine.

Mittels der erfindungsgemäßen elektrischen Maschine ist unter Beibehaltung eines bewährten Luftströmungsprinzips eine verbessere Kühlung der elektrischen Maschine möglich. Die elektrische Maschine kann daher bei im Übrigen unverändertem Aufbau mit einer höheren Dauernennleistung bzw. Spitzennennleistung als im Stand der Technik betrieben werden.

Die obige Beschreibung dient ausschließlich der Erläuterung der vorliegenden Erfindung. Der Schutzumfang der vorliegenden Erfindung durch die beigefügten Ansprüche definiert.

## Patentansprüche

1. Elektrische Maschine
- wobei die elektrische Maschine ein Gehäuse (1) aufweist,
- wobei im Gehäuse (1) eine Rotorwelle (2) gelagert ist, so dass sie um eine Wellenachse (3) drehbar ist,
- wobei das Gehäuse (1) zwei Stirnflächen (4) aufweist, mit denen das Gehäuse (1) einen Gehäuseinnenraum (6) axial begrenzt,
- wobei das Gehäuse (1) eine Mantelfläche (5) aufweist, mit der das Gehäuse (1) den Gehäuseinnenraum (6) radial begrenzt,
- wobei auf der Rotorwelle (2) ein Läuferblechpaket (7) angeordnet ist,
- wobei das Läuferblechpaket (7) axial verlaufende Kühlkanäle (8) und radial verlaufende Kühlkanäle (9) aufweist,
- wobei die radial verlaufenden Kühlkanäle (9) des Läuferblechpakets (7) nach radial außen offen sind und sich nach radial innen zumindest bis zu den axial verlaufenden Kühlkanälen (8) erstrecken,
- wobei das Gehäuse (1) zwei Axialtrennbleche (10) aufweist, die sich ausgehend von der Mantelfläche (5) nach radial innen erstrecken, aber vor der Rotorwelle (2) enden,
- wobei die Axialtrennbleche (10) in Axialrichtung gesehen zwischen dem Läuferblechpaket (7) und den Stirnflächen (4) angeordnet sind,
- wobei das Gehäuse (1) Axialrippen (11) aufweist, die über den Umfang der Mantelfläche (5) verteilt angeordnet sind, zumindest zwischen den Axialtrennblechen (10) axial verlaufen und sich nach radial innen erstrecken,
- wobei die Axialrippen (11) ein mit dem Läuferblechpaket (7) elektrisch zusammenwirkendes Ständerblechpaket (12) tragen,
- wobei das Ständerblechpaket (12) radial verlaufende Kühlkanäle (13) aufweist, die nach radial innen und nach radial außen offen sind und mit den radial verlaufenden Kühlkanälen (9) des Läuferblechpakets (7) zusammenwirken,
- wobei das Ständerblechpaket (12) eine Ständerwicklung (14) trägt,
- wobei die Ständerwicklung (14) Wicklungsköpfe (15) aufweist, die axial beidseitig aus dem Ständerblechpaket (12) herausragen,
- wobei die Axialtrennbleche (10) sich so weit nach radial innen erstrecken, dass sie in Radialrichtung gesehen die Wicklungsköpfe (15) überdecken,
- wobei die Mantelfläche (5) in einem ersten Tangentialbereich (16) zwei Einlassöffnungen (17) und eine Auslassöffnung (18) für Kühlluft (19) aufweist,
- wobei die Einlassöffnungen (17) in Axialrichtung gesehen zwischen je einer der Stirnflächen (4) und je einem der Axialtrennbleche (10) angeordnet sind,
- wobei die Auslassöffnung (18) in Axialrichtung gesehen zwischen den Axialtrennblechen (10) angeordnet ist,
- wobei das Gehäuse (1) zwei Radialtrennbleche (20) aufweist,
- wobei die Radialtrennbleche (20) in Radialrichtung gesehen zwischen den Wicklungsköpfen (15) und den Axialrippen (11) angeordnet sind, sich in Axialrichtung gesehen vom Ständerblechpaket (12) zu je einem der Axialtrennbleche (10) erstrecken und in Tangentialrichtung gesehen sich über einen zweiten Tangentialbereich (21) erstrecken, der zum ersten Tangentialbereich (16) überlappungsfrei ist,
- wobei der erste und der zweite Tangentialbereich (16,21) sich zusammen mit maximal zwei Resttangentialbereichen (22) zu einem Vollkreis ergänzen,
- wobei die Axialrippen (11) im Bereich der Radialtrennbleche (20) eine geringere Radialerstreckung aufweisen als im Bereich des Ständerblechpakets (12).

2. Elektrische Maschine nach Anspruch 1, **dadurch gekennzeichnet , dass** die Axialtrennbleche (10) radial innere Enden (23) aufweisen, die in Radialrichtung gesehen weiter radial innen angeordnet sind als die Wicklungsköpfe (15), und dass an den radial inneren Enden (23) der Axialtrennbleche (10) Abschlussringe (24) angeordnet sind, die sich in Axialrichtung gesehen auf das Ständerblechpaket (12) zu erstrecken, aber vom Ständerblechpaket (12) beabstandet sind.

3. Elektrische Maschine nach Anspruch 1 oder 2, **a durch gekennzeichnet** , dass auf der Rotorwelle (2) in Bereich der Axialtrennbleche (10) Lüfter (25) angeordnet sind.

## Claims

1. Electric machine,
- wherein the electric machine has a housing (1),
- wherein a rotor shaft (2) is mounted in the housing (1) such that it is capable of rotating about a shaft axis (3),
- wherein the housing (1) has two ends faces (4), with which the housing (1) axially delimits a housing interior (6),
- wherein the housing (1) has a lateral surface (5), with which the housing (1) radially delimits the housing interior (6),
- wherein a rotor laminate stack (7) is arranged on the rotor shaft (2),
- wherein the rotor laminate stack (7) has axially running cooling channels (8) and radially running cooling channels (9),
- wherein the radially running cooling channels (9) of the rotor laminate stack (7) are open radially outwards and extend radially inwards at least as far as the axially running cooling channels (8),
- wherein the housing (1) has two axial dividers (10), which extend radially inwards starting from the lateral surface (5), but end in front of the rotor shaft (2),
- wherein the axial dividers (10) are arranged between the rotor laminate stack (7) and the end faces (4), when viewed in the axial direction,
- wherein the housing (1) has axial ribs (11), which are arranged so as to be distributed over the circumference of the lateral surface (5), run axially at least between the axial dividers (10) and extend radially inwards,
- wherein the axial ribs (11) bear a stator laminate stack (12), which interacts electrically with the rotor laminate stack (7),
- wherein the stator laminate stack (12) has radially running cooling channels (13), which are open radially inwards and radially outwards and interact with the radially running cooling channels (9) of the rotor laminate stack (7),
- wherein the stator laminate stack (12) bears a stator winding (14),
- wherein the stator winding (14) has end windings (15), which protrude axially on both sides out of the stator laminate stack (12),
- wherein the axial dividers (10) extend radially inwards to such an extent that they overlap the end windings (15), when viewed in the radial direction,
- wherein the lateral surface (5) has, in a first tangential region (16), two inlet openings (17) and an outlet opening (18) for cooling air (19),
- wherein the inlet openings (17) are arranged between in each case one of the end faces (4) and in each case one of the axial dividers (10), when viewed in the axial direction,
- wherein the outlet opening (18) is arranged between the axial dividers (10), when viewed in the axial direction,
- wherein the housing (1) has two radial dividers (20),
- wherein the radial dividers (20) are arranged between the end windings (15) and the axial ribs (11), when viewed in the radial direction, extend from the stator laminate stack (12) as far as in each case one of the axial dividers (10), when viewed in the axial direction, and, when viewed in the tangential direction, extend over a second tangential region (21), which is free of overlap with respect to the first tangential region (16),
- wherein the first and the second tangential regions (16, 21) supplement one another with a maximum of two residual tangential regions (22) to form a full circle,
- wherein the axial ribs (11) have a smaller radial extent in the region of the radial dividers (20) than in the region of the stator laminate stack (12).

2. Electric machine as claimed in Claim 1, **characterized in that** the axial dividers (10) have radially inner ends (23), which are arranged further radially inwards than the end windings (15), when viewed in the radial direction, and **in that** terminating rings (24), which extend towards the stator laminate stack (12), when viewed in the axial direction, but are spaced apart from the stator laminate stack (12), are arranged at the radially inner ends (23) of the axial dividers (10).

3. Electric machine as claimed in Claim 1 or 2, **characterized in that** fans (25) are arranged on the rotor shaft (2) in the region of the axial dividers (10).

## Revendications

1. Machine électrique
- dans laquelle la machine électrique comporte un carter (1),
- dans laquelle un arbre (2) de rotor est monté dans le carter (1) de manière à tourner autour d'un axe (3) d'arbre,
- dans laquelle le carter (1) a deux faces (4) frontales par lesquelles le carter (1) délimite axialement un espace (6) intérieur du carter,
- dans laquelle le carter (1) a une surface (5) latérale par laquelle le carter (1) délimite radialement l'espace (6) intérieur du carter,
- dans laquelle un paquet (7) de tôles rotoriques est monté sur l'arbre (2) du rotor,
- dans laquelle le paquet (7) de tôles rotoriques a des canaux (8) de refroidissement s'étendant axialement et des canaux (9) de refroidissement s'étendant radialement,
- dans laquelle les canaux (9) de refroidissement s'étendant radialement du paquet (7) de tôles rotoriques sont ouverts à l'extérieur radialement et s'étendent vers l'intérieur radialement au moins jusqu'au canaux (8) de refroidissement s'étendant axialement,
- dans laquelle le carter (1) a deux tôles (10) de séparation axiale, qui s'étendent vers l'intérieur radialement en partant de la surface (5) latérale, mais se terminent avant l'arbre (2) rotorique,
- dans laquelle les tôles (10) de séparation axiale sont, considérées dans la direction axiale, disposées entre le paquet (7) de tôles rotoriques et les faces (4) frontales,
- dans lequel le carter (1) a des nervures (11) axiales qui sont réparties sur le pourtour de la surface (5) latérale, s'étendent axialement au moins entre les tôles (10) de séparation axiale et s'étendent vers l'intérieur radialement,
- dans laquelle les nervures (11) axiales portent un paquet (12) de tôles statoriques coopérant électriquement avec le paquet (7) de tôles rotoriques,
- dans laquelle le paquet (12) de tôles statoriques a des canaux (13) de refroidissement s'étendant radialement, qui sont ouverts vers l'intérieur radialement et vers l'extérieur radialement et qui coopèrent avec les canaux (9) de refroidissement s'étendant radialement du paquet (7) de tôles rotoriques,
- dans laquelle le paquet (12) de tôles statoriques porte un enroulement (14) statorique,
- dans laquelle l'enroulement (14) statorique a des têtes (15) d'enroulement qui dépassent axialement des deux côtés du paquet (12) de tôles statoriques,
- dans laquelle les tôles (10) de séparation axiale s'étendent si loin vers l'intérieur radialement qu'elles recouvrent, considéré dans la direction radiale, les têtes (15) d'enroulement,
- dans laquelle la surface (5) latérale a dans une première zone (16) tangentielle deux ouvertures (7) d'entrée et une ouverture (18) de sortie pour de l'air (19) de refroidissement,
- dans laquelle les ouvertures (17) d'entrée sont, considéré dans la direction axiale, disposées, entre respectivement l'une des faces (4) frontales et respectivement l'une des tôles (10) de séparation axiale,
- dans laquelle l'ouverture (18) de sortie est, considéré dans la direction axiale, disposée entre les tôles (10) de séparation axiale,
- dans laquelle le carter (1) a deux tôles (1) de séparation radiale,
- dans laquelle les tôles (20 de séparation radiale sont considéré dans la direction radiale, disposées entre les têtes (15) d'enroulement et les nervures (11) axiales, s'étendent, considéré dans la direction axiale du paquet (12) de tôles statoriques, vers respectivement l'une des tôles (10) de séparation axiale et s'étendent dans la direction tangentielle sur une deuxième zone (1) tangentielle qui ne chevauche pas la première zone (16) tangentielle,
- dans laquelle la première et la deuxième zones (16, 21) tangentielles se complètent ensemble avec au maximum deux zones (22) tangentielles restante en un cercle complet,
- dans laquelle les nervures (11) axiales ont, dans la zone des tôles (20) de séparation radiale, une étendue radiale plus petite que dans la zone du paquet (12) de tôles statoriques.

2. Machine électrique suivant la revendication 1, **caractérisée en ce que** les tôles (10) de séparation axiale ont des extrémités (23) intérieures radialement qui, considéré dans la direction radiale, sont disposées plus loin vers l'intérieur radialement que les têtes (15) d'enroulement et **en ce que** sur les extrémités (23) intérieures radialement des tôles (10) de séparation axiale sont disposées des anneaux (24) de fermeture, qui s'étendent, considérée dans la direction axiale, sur le paquet (12) de tôles statoriques, mais sont à distance du paquet (12) de tôles statoriques.

3. Machine électrique suivant la revendication 1 ou 2, **caractérisée en ce que** des ventilateurs (25) sont montés sur l'arbre (2) du rotor dans la zone des tôles (10) de séparation axiale.
